# EUROPEAN PATENT SPECIFICATION

(11) **EP 1 898 253 B1**
(45) Date of publication and mention of the grant of the patent: **23.12.2009**
(21) Application number: 07016075.9
(22) Date of filing: 16.08.2007
(51) Int. Cl.: G02F 1/1339

(54) **Spacer spraying method and liquid crystal display manufactured by the same**
Abstandselement-Sprühverfahren und damit hergestellte Flüssigkristallanzeige
Procédé de vaporisation d'entretoise et affichage à cristaux liquides fabriqué selon ce procédé

(30) Priority: 08.09.2006 KR 20060086745
(43) Date of publication of application: 12.03.2008
(73) Proprietor: Samsung Electronics Co., Ltd., Yeongtong-gu Suwon-city, Gyeonggi-do 442-742 (KR)
(72) Inventor: Han, Hye-rhee, Gyeonggi-do (KR); Joo, Young-kuil, Chungcheongnam-do (KR)
(74) Representative: Dr. Weitzel & Partner

(56) References cited:
- JP-A- 4 256 925
- JP-A- 5 053 121
- JP-A- 5 061 052
- JP-A- 2000 122 072
- US-A1- 2001 040 665
- US-A1- 2003 214 621
- US-A1- 2004 189 928
- US-A1- 2004 257 519

## Description

### BACKGROUND OF INVENTION

### Field of the invention

The present invention relates to a spacer spraying apparatus and a liquid crystal display panel manufactured by the same, more particularly, to a spacer spraying apparatus which selectively scatters ball spacers in a specific region and a liquid crystal display panel manufactured by the same.

### Discussion of the background

In general, a ball spacer is movable by external impact, while an organic column-type pattern spacer is fixed. If the ball spacer is moved by external impact, surfaces of an alignment film or a pixel electrode which are adjacent to the ball spacer may be damaged thereby causing light leakage and deterioration of image quality.

US 2003 0214621 A discloses a liquid crystal display device wherein spacers are provided in holes formed in the pixel electrodes or an insulating layer on the gate lines. The features of the preamble of claim 1 are known from this document.

Further, in a conventional ball spacer scattering method, since the ball spacer is not scattered over a specific region of a display region but all over the display region, the ball spacer may frequently be disposed in a pixel region. Thus, if the ball spacer is not scattered evenly but scattered with varying densities in the pixel region, the image quality may deteriorate in the pixel region.

### SUMMARY OF THE INVENTION

The present invention provides a fixing method of a ball spacer sprayed by the spacer spraying apparatus in a specific region.

The present invention also provides a liquid crystal display manufactured by the spacer spraying apparatus and the fixing method of the spacer.

Additional aspects of the present invention will be set forth in part in the description which follows and, in part, will be obvious from the description, or may be learned by practice of the present invention.

The present invention discloses a display device according to claim 1.

' The present invention also discloses a method for manufacturing a display device according to claim 6. Further developments are defined in the dependent claims.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a sectional view showing a spacer spraying apparatus.

FIG. 2 is a plan view of a liquid crystal display panel.

FIG. 3 is an enlarged view of a pixel region of an array substrate according to an exemplary embodiment of the present invention.

FIG. 4 is a sectional view of an array substrate according to an exemplary embodiment of the present invention.

FIG. 5A, FIG. 5B, FIG. 5C, FIG. 5D, and FIG. 5E illustrate processes of manufacturing the array substrate in FIG. 4.

FIG. 6, FIG. 7, FIG. 8, and FIG. 9 are enlarged views of a pixel region of an array substrate according to exemplary embodiments of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

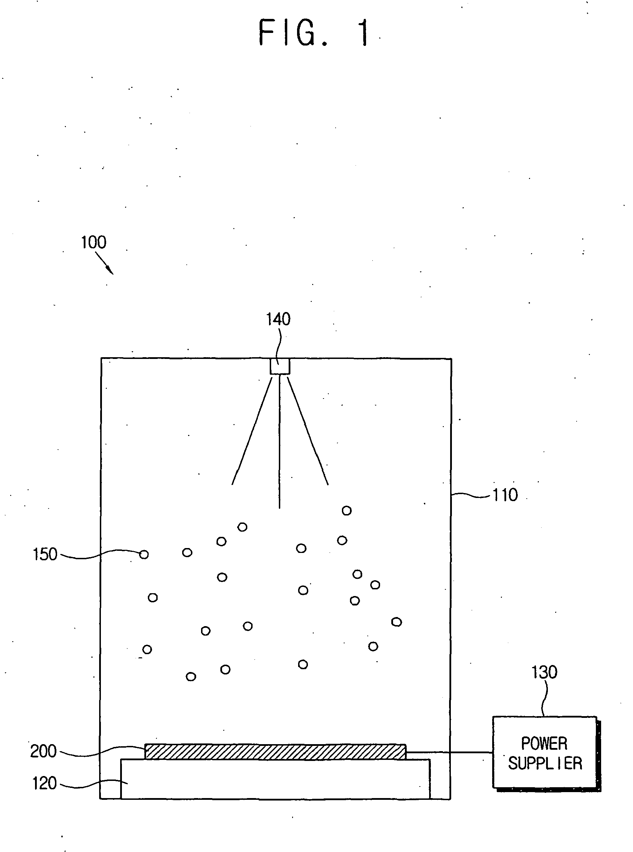

Referring to FIG. 1, a spacer spraying apparatus 100 includes a chamber 110, a table 120, a spraying nozzle 140, and a power supplier 130. The spacer spraying apparatus 100 sprays spacers 150 over a display substrate 200. The spacers 150 are provided to maintain a gap between an upper substrate and a lower substrate and may have various shapes, such as a spherical shape, a rectangular parallelepiped, and a polyhedron. In the present exemplary embodiment, the spacers 150 may be ball-shaped.

The chamber 110 provides an enclosed space where the ball spacers 150 are sprayed. The table 120, the display substrate 200, the power supplier 130, and the spraying nozzle 140 are accommodated in the enclosed space.

The table 120 is disposed on a lower part of the chamber 110 to support the display substrate 200 on which the ball spacers 150 will be scattered. The display substrate 200 on the table 120 receives a voltage from the power supplier 130.

The display substrate 200 includes an array substrate (not shown) having a switching element (not shown) or a color filter substrate (not shown) that faces the array substrate. The display substrate 200 is seated on the table 120.

The spray nozzle 140 is disposed in the- chamber 110 to spray the ball spacers 150 provided from the ball spacer supplier (not shown) onto the display substrate 200.

The ball spacers 150 sprayed from the spray nozzle 140 fall onto the display substrate 200 by a spraying pressure of the spray nozzle 140, gravity, and electric magnetism by an electric field.

The ball spacers 150 may include a milk-white polymer and may have a circular or an oval shape. The ball spacers 150 are in the range of about 2µm to about 6µm in diameter and are positively charged while rotating in the spray nozzle 140. The ball spacers 150 of the same polarity have repulsive force, and thus they may be evenly distributed on the substrate.

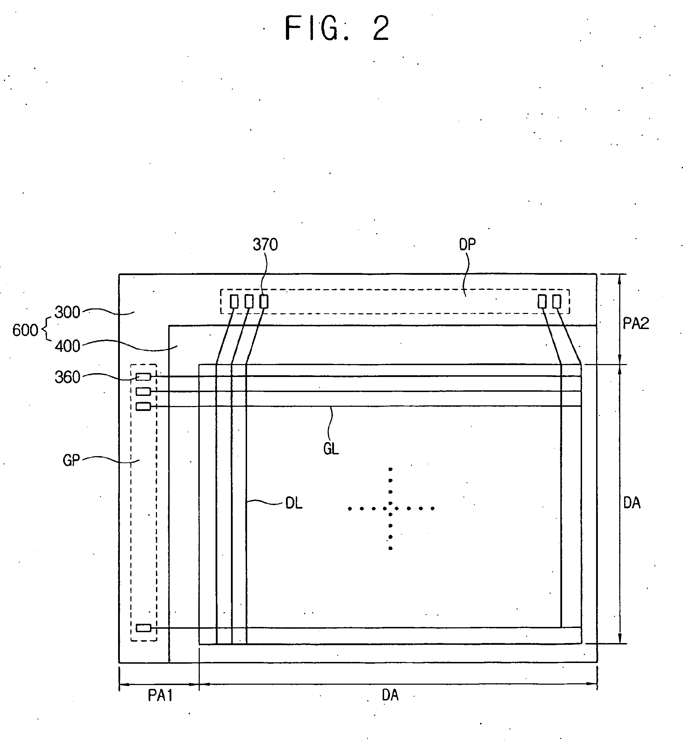

FIG. 2 is a plan view of a liquid crystal display (LCD) panel according to an exemplary embodiment of the present invention.

Referring to FIG. 2, the LCD panel 600 includes a display region DA where images are displayed and a circumferential region PA1 and PA2, which is formed around the display region DA to apply electric signals to the display region DA.

In detail, the LCD panel 600 includes an array substrate 300, a color filter substrate 400 facing the array substrate 300, and a liquid crystal layer 500 interposed between the substrates 300 and 400.

A plurality of gate wires GL and a plurality of data wires DL are formed in the display region DA of the array substrate 300 in a first direction and in a second direction, respectively. A plurality of switching elements are connected to the gate wires GL and the data wires DL on the array substrate 300, and a plurality of pixel electrodes are connected to the switching elements on the array substrate 300.

A gate pad part GP is formed in a first circumferential region PA1 of the array substrate 300. The gate pad part GP includes a plurality of gate pads 360 electrically connected to the gate wires GL. The gate pad part GP is electrically connected to an output terminal (not shown) of a gate driver chip to apply a gate signal output from the gate driver chip (not shown) to the gate wires GL. Further, a shift register, which includes a plurality of stages to output a gate signal to the gate wires GL, may be formed in the first circumferential region PA1.

In detail, the gate pads 360 include an electrode pattern (not shown) that is electrically connected to one end portion of the gate wires GL. The electrode pattern is formed in the same layer as a transparent electrode. The electrode pattern (not shown) is electrically connected to the output terminal of the driver chip to apply the gate signal to one end portion of the gate wires GL.

A data pad part DP is formed in a second circumferential region PA2 of the array substrate 300. The data pad part DP includes a plurality of data pads 370, which are electrically connected to the data wires DL. The data pad part DP is electrically connected to an output terminal (not shown) of a data driver chip to apply a data signal output from the data driver chip (not shown) to the data wires DL.

The array substrate 300 is set on the table 120 in the spacer spraying apparatus in FIG. 1, and a voltage is applied to the gate pads 360 and the data pads 370 from the power supplier 130. The gate pads 360 and the data pads 370 may receive a voltage of the same polarity or voltages of different polarities. Further, the gate pads 360 and the data pads 370 may not receive a voltage. When the gate pads 360 receive a voltage, the gate wires GL receive the voltage. When the data pads 370 receive a voltage, the data wires DL receive the voltage. For example, if the ball spacers are positively charged and sprayed, the gate pads 360 may receive a negative voltage, and the data pads 370 may receive a positive voltage. Therefore, the ball spacers may be disposed on the gate wires GL due to an attractive force but not disposed on the data wires DL due to a repulsive force. Further, because of the strong attractive force of the gate wires GL, the ball spacers 150 are not disposed in a pixel region although a voltage is not applied to the pixel region. The foregoing voltage applying method may cause the ball spacers 150 to be disposed selectively on the gate wires GL or on the data wires DL, and not on the pixel region.

Likewise, the spacers 150 may be sprayed over the color filter substrate 400 in the same manner that the spacers 150 are sprayed over the array substrate 300. If a light blocking member of the color filter substrate 400 includes a metal material, e.g., chrome (Cr) or the like, the ball spacers 150 may be disposed selectively on the light blocking member by applying a voltage to the light blocking member.

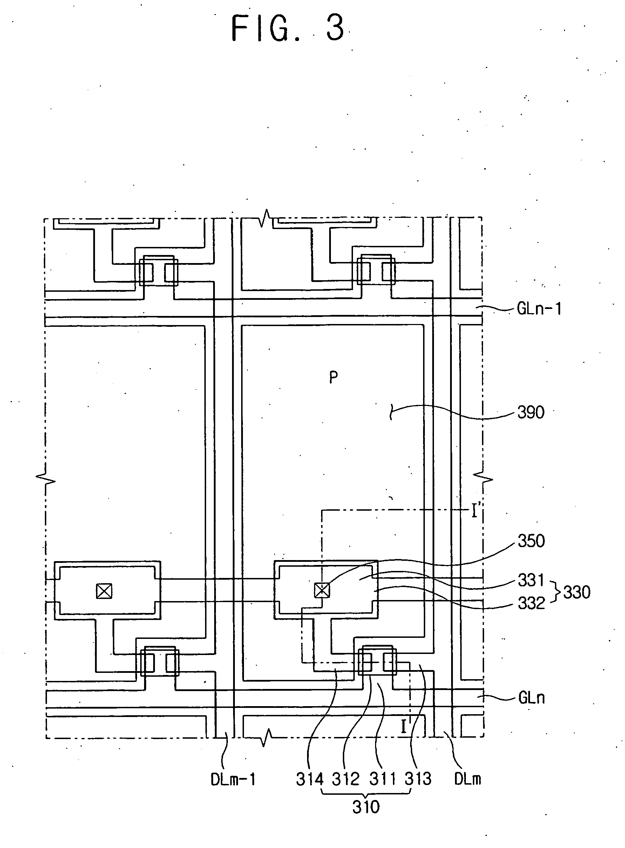

FIG. 3 is an enlarged plan view of the pixel region of the LCD panel according to the exemplary embodiment of the present invention.

Referring to FIG. 3, the array substrate includes a plurality of gate wires GLn-1 and GLn formed in the first direction, a plurality of data wires DLm-1 and DLm formed in the second direction, which crosses the first direction, and a plurality of pixel regions P defined by the gate wires GLn-1 and GLn and the data wires DLm-1 and DLm.

A switching element (e.g., thin film transistor (TFT)) 310, a storage capacitor 330 connected to the switching element 310, and a pixel electrode 390 are formed in each pixel region P.

The switching element 310 includes a gate electrode 311 connected to one gate wire GLn, a source electrode 313 connected to the one data wire DLm, and a drain electrode 314 connected to the pixel electrode 390 through a contact hole 350. A channel region 312 is formed between the gate electrode 311 and the source and drain electrodes 313 and 314.

The storage capacitor 330 includes a first electrode 331 in the same metal layer as the gate wires GL and a second electrode 332 in the same metal layer as the drain electrode 314. The first electrode 331 in the same metal layer as the gate wires GL is referred to as a storage electrode. The storage capacitor 330 maintains a pixel voltage charged in a liquid crystal capacitor for one frame when the switching element 310 is turned off.

The gate wire GLn, the gate electrode 311 extending from the gate wire GLn, and the first electrode 331 of the storage capacitor are formed in a gate metal layer. The gate metal layer may include a metal such as aluminum (A1), aluminum-based metal such as aluminum alloy, silver (Ag), silver-based metal such as silver alloy, molybdenum (Mo), molybdenum-based metal such as molybdenum alloy, chrome (Cr), copper (Cu), tantalum (Ta), or titanium (Ti). The gate wires GL may be formed as a single layer, a double layer, or a triple layer, including the foregoing metals.

The data wire DLm, the source electrode 313, the drain electrode 314, and the second electrode 332 of the storage capacitor 330 are formed in a source metal layer.

The source metal layer may include a metal such as aluminum (A1), aluminum-based metal such as aluminum alloy, silver (Ag), silver-based metal such as silver alloy, molybdenum (Mo), molybdenum-based metal such as molybdenum alloy, chrome (Cr), copper (Cu), tantalum (Ta), or titanium (Ti). The data wires DL may be formed as a single layer, a double layer, or a triple layer including the foregoing metals.

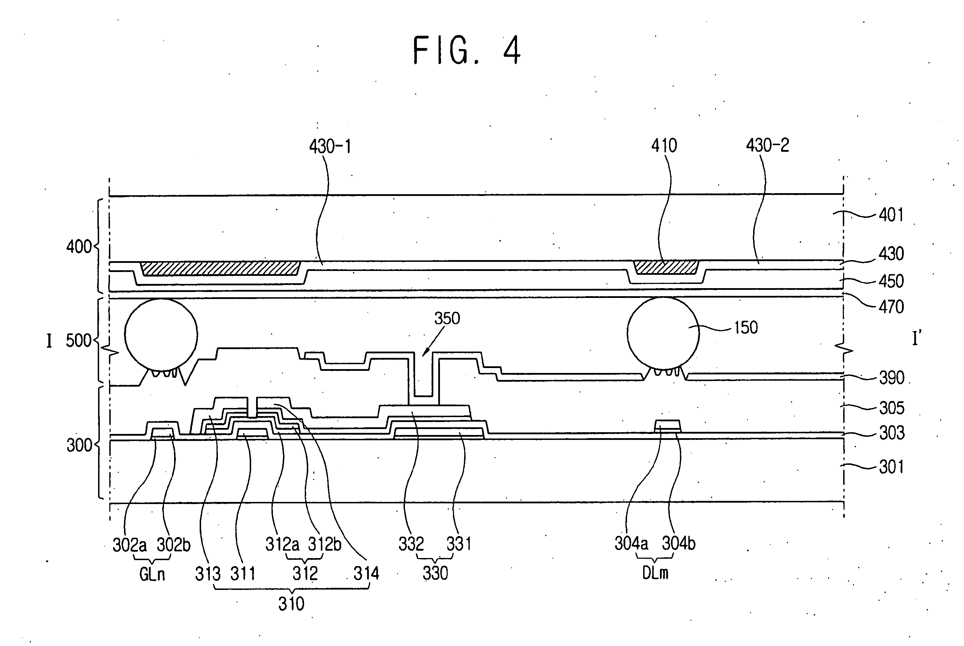

FIG. 4 is a sectional view of the LCD panel including the array substrate in FIG. 3 taken along I-I' of FIG. 3.

Referring to FIG. 3 and FIG. 4, the LCD panel includes the array substrate 300, the color filter substrate 400, and the liquid crystal layer 500 interposed between the substrates 300 and 400.

The array substrate 300 includes a first base substrate 301. The gate metal layer is deposited on the first base substrate 301 and patterned to form a gate metal pattern, which includes the gate electrode 311 of the switching element 310, the gate wires GL, and the first electrode 331 of the storage capacitor 330.

The gate metal pattern includes a first gate metal layer 302a formed on the first base substrate 301 and a second gate metal layer 302b formed on the first gate metal layer 302a.

A gate insulating layer 303 is formed on the first base substrate 301 having the gate metal pattern. The channel region 312 is formed on the gate insulating layer 303. The channel region 312 includes an activating layer 312a made of amorphous silicon (a-Si:H) and an ohmic contact layer 312b made of amorphous silicon that is highly doped with n+ ion.

The data metal layer is deposited on the first base substrate 301, where the channel region 312 is formed, and patterned to form a data metal pattern, which includes the data wires DL, the source electrode 313 and the drain electrode 314 of the switching element 310, and the second electrode 332 of the storage capacitor 330.

A passivation insulation layer 305 is formed on the first base substrate 301 having the data metal pattern. The passivation insulating layer 305 includes the contact hole 350 to expose a portion of the drain electrode 314.

The pixel electrode 390 is made of a transparent conductive material and electrically connected to the drain electrode 314 through the contact hole 350. Accordingly, the transparent electrode is formed in the pixel region P.

The color filter substrate 400 includes a second base substrate 401, a light blocking pattern 410, a color filter layer 430, an overcoat layer 450, and a common electrode layer 470. The light blocking pattern 410 is formed on the second base substrate 401 to define an inner space corresponding to the pixel region P and to block light leakage.

The color filter layer 430 includes a plurality of color filter patterns 430-1 and 430-2 and is filled in the inner space. The color filter layer 430 responds to incident light and emits light of its own color. In the present exemplary embodiment, the color filter layer 430 may include red, green, and blue patterns.

The overcoat layer 450 is formed on the second base substrate 401, where the color filter patterns 430-1 and 430-2 are formed, to provide the second base substrate 401 with a plane surface.

The common electrode layer 470 is formed on the overcoat layer 450. The common electrode layer 470 is provided as a counter electrode of the pixel electrode 390 and applied with a common voltage. Accordingly, the liquid crystal capacitor is defined with the pixel electrode 390 as a first electrode and the common electrode layer 470 as a second electrode.

The spacers 150 are disposed on the array substrate 300 or the color filter substrate 400 to maintain a regular gap between the array substrate 300 and the color filter substrate 400. The ball spacers 150 are illustrated in FIG. 4, but pillar spacers may be provided to maintain the gap. The ball spacers 150 may be disposed in-an area which is covered with the light blocking pattern, but not in the pixel region.

The liquid crystal layer 500 is disposed between the array substrate 300 and the color filter substrate 400. Orientation of liquid crystal molecules of the liquid crystal layer 500 varies corresponding to intensity of an electric field by the pixel electrode 390 of the array substrate 300 and the common electrode layer 470 of the color filter layer 400, thereby realizing images.

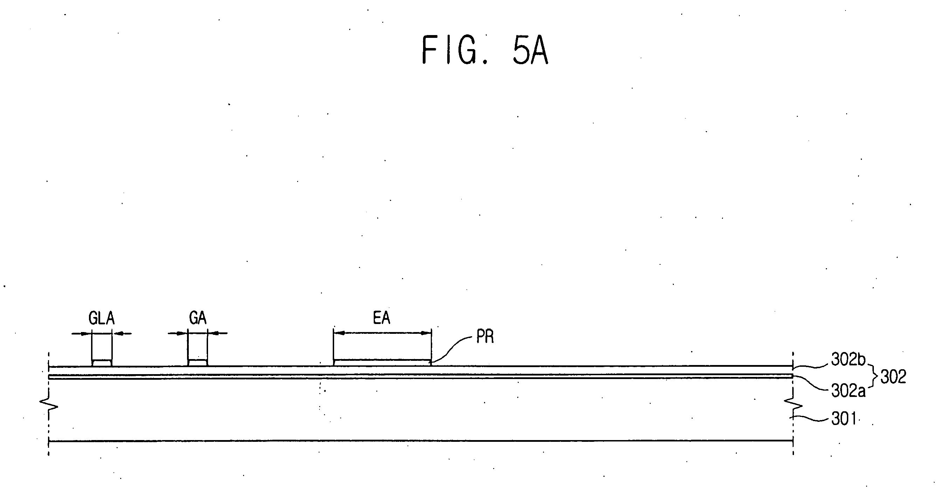

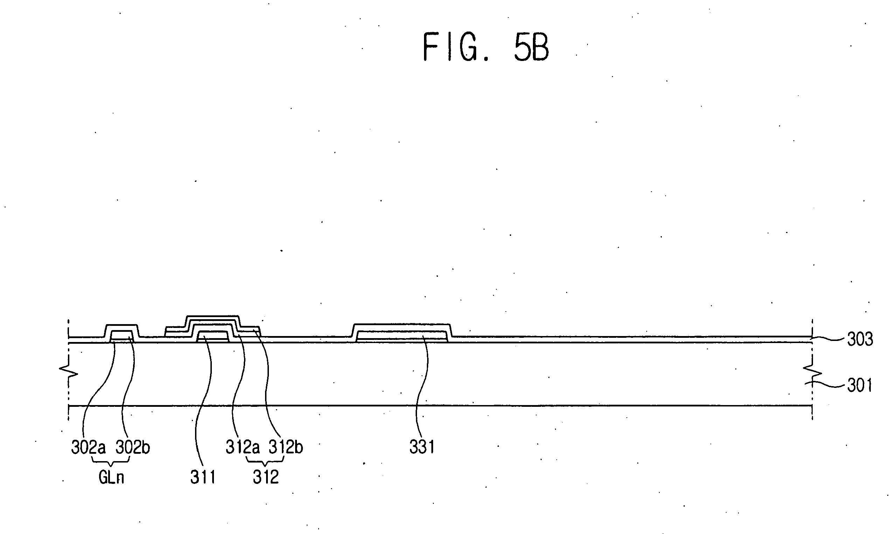

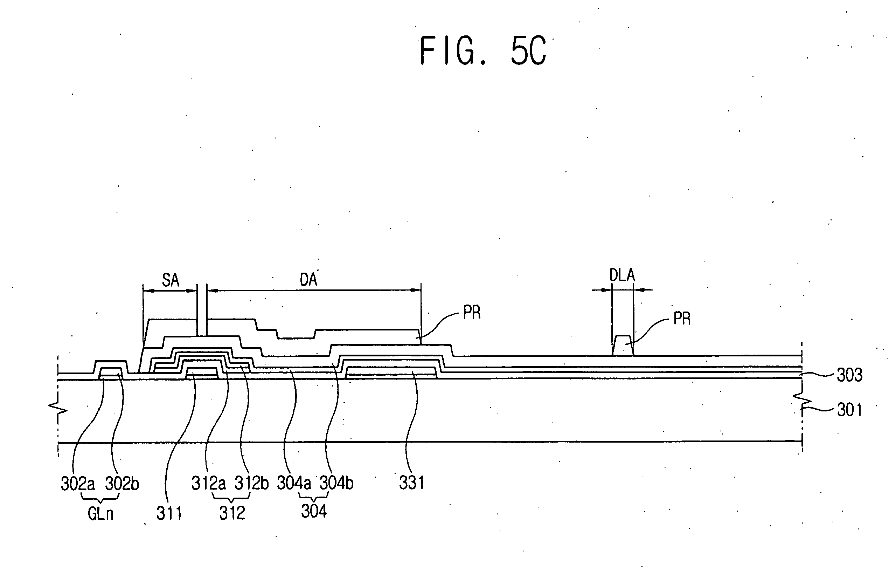

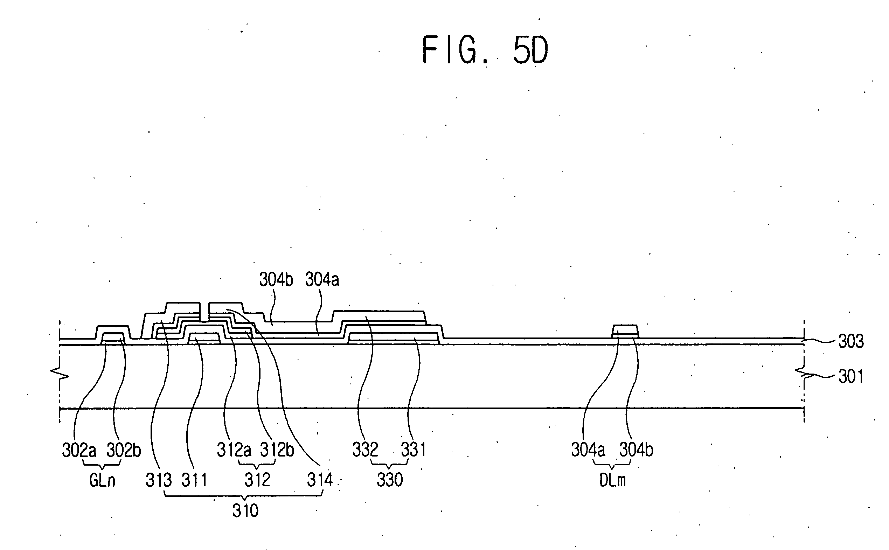

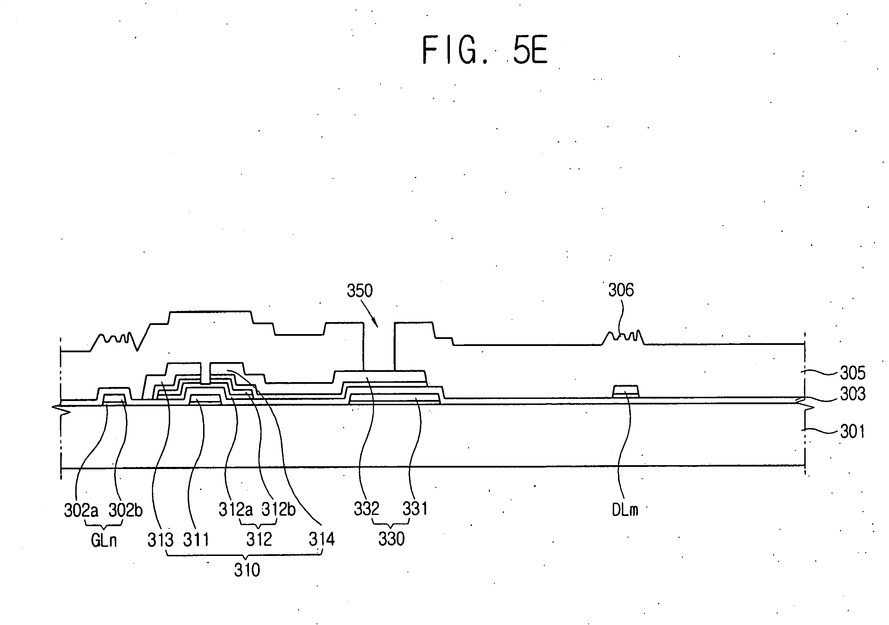

FIG. 5A, FIG. 5B, FIG. 5C, FIG. 5D, and FIG. 5E illustrate processes of manufacturing the array substrate in FIG. 4.

Referring to FIG. 4 and FIG. 5A, the gate metal layer 302 is deposited on the base substrate 301 and patterned to form the gate metal pattern. The gate metal pattern includes the gate wire GLn, the gate electrode 311, and the first electrode 331 of the storage capacitor 330.

The gate metal layer 302 includes the first gate metal layer 302a and the second gate metal layer 302b. The gate metal layer 302 may be deposited by sputtering and may include Cu, Al, Ag, Ti, Cr, Mo, etc. In the present exemplary embodiment, the gate metal layer 302 may include a double layer of Mo and Al, a double layer of Cr and Al, etc.

A photoresist layer is formed on the base substrate 301 where the gate metal layer 302 is formed and is patterned to form a photoresist pattern PR. The photoresist pattern PR is formed corresponding to an area where the gate metal pattern is formed, i.e., corresponding to a gate wires area GLA, a gate electrode area GA, and a first electrode area EA.

The first gate metal layer 302a of the gate metal layer 302 is etched using the photoresist pattern PR.

Referring to FIG. 4 and FIG. 5B, the gate insulating layer 303 is formed on the base substrate 301 where the gate metal pattern is formed. The gate insulating layer 303 may be formed of an insulating material, e.g., silicon nitride (SiNx), using plasma-enhanced chemical vapor deposition (PECVD) and has about a thickness of 4,000Å.

Then, the active layer 312a of amorphous silicon (a-Si:H) and the ohmic contact layer 312b of amorphous silicon, which is highly doped with n+ ion, are sequentially deposited on the base substrate 301 by PECVD.

The photoresist pattern (not shown) is formed on the base substrate 301 where the ohmic contact layer 312b is formed, and the activating layer 312a and the ohmic contact layer 312b are patterned using the photoresist pattern to form the channel region 312 of the switching element.

Referring to FIG. 4, FIG. 5C, and FIG. 5D, the data metal layer 304 is deposited on the base substrate 301 formed with the channel region 312 and patterned to form the data metal pattern. The data metal pattern includes the data wire DLm, the source electrode 313, the drain electrode 314, and the second electrode 332 of the storage capacitor 330.

The data metal layer 304 includes a first metal layer 304a and a second metal layer 304b. The data metal layer 304 may be deposited by sputtering like the gate metal layer 302. The first metal layer 304a and the second metal layer 304b may include Cu, Al, Ag, Ti, Cr, Mo, etc. In the present exemplary embodiment, the data metal layer 304 may include a double layer of Mo and Al, a double layer of Cr and Al, etc. Further, the data metal layer 304 may be formed as a triple layer.

A photoresist layer is formed on the base substrate 301 where the data metal layer 304 is formed, and patterned to form a photoresist pattern PR. The photoresist pattern PR is formed corresponding to a data wires area DLA, a source electrode area SA and a drain electrode area DA. The drain electrode area DA includes a second electrode area of the storage capacitor 330.

The data metal layer 304 is patterned using the photoresist pattern PR.

Referring to FIG. 4 and FIG. 5D, the exposed ohmic contact layer 312b is removed using the source and drain electrodes 313 and 314 as a mask, thereby completing the channel region 312 of the switching element 310.

Referring to FIG. 4 and FIG. 5E, the passivation insulation layer 305 is formed on the base substrate 301, where the data metal pattern is formed. The passivation insulation layer 305 may be formed of an insulating material, e.g., silicon nitride (SiNx), using plasma-enhanced chemical vapor deposition (PECVD) and has a thickness of about 4,000Å. Alternatively, the passivation insulation layer 305 may be formed by coating an organic material. In this case, the passivation insulation layer 305 has a thickness of about 3µm to about 5µm. Also, the passivation insulation layer 305 may be formed of a double layer including silicon nitride (SiNx) by chemical vapor deposition and an organic insulating material.

The contact hole 350 is formed in the passivation insulation layer 305 to expose a portion of the drain electrode 314. Here, an embossing pattern 306 is formed on a portion of the insulation layer 305 over the gate wire GLn and the data wire DLm. The embossing pattern 306 may be formed by a slit mask on a corresponding portion of the gate wire GLn and the data wire DLm together with the mask used to form the contact hole 350.

The embossing pattern 306 over the gate wire GL and the data wire DL may prevent the ball spacers 150 from moving by an external pressure after the ball spacers 150 are sprayed over the gate wires GL and the data wires DL.

The embossing pattern 306 may be formed in various shapes, such as a circle or a polygon. For example, the size of the embossing pattern 306 may be smaller than the diameter of the ball spacers 150. Further, a depth of the embossing pattern 306 may be the same as or smaller than the thickness of the passivation insulation layer 305.

Subsequently, a transparent conductive material is deposited on the base substrate 301 having the contact hole 350 and patterned to form the pixel electrode 390. The transparent conductive material may be indium tin oxide (ITO), indium zinc oxide (IZO), or indium tin zinc oxide (ITZO). The pixel electrode 390 is electrically connected to the drain electrode 314 through the contact hole 350 to receive a pixel voltage when the switching element 310 is turned on.

Thus, the array substrate 300 is completed. An alignment film (not shown) may be coated on the array substrate 300, and then the array substrate 300 may be disposed in the spacer spraying apparatus 100 of FIG. 1 to be sprayed with the ball spacers 150.

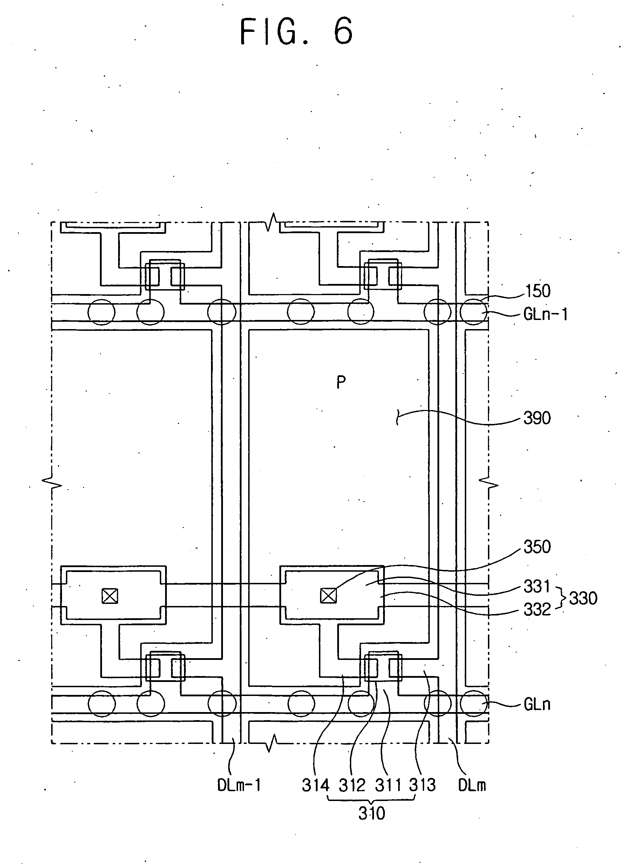

FIG. 6, FIG. 7, FIG. 8 and FIG. 9 are plan views of the array substrate that show locations where the ball spacers are sprayed.

Referring to FIG. 6, in an exemplary embodiment of the present invention, a negative voltage is applied only to gate wires GL. Thus, the negative voltage is not applied to data wires DL. Rather, a positive voltage or no voltage may be applied to the data wires DL. As described above, ball spacers 150, which are positively charged, are disposed on the gate wires GL by attractive force. Here, the ball spacers 150 are settled by an embossing pattern 306 formed on a passivation insulation layer 305 and do not move by external impact.

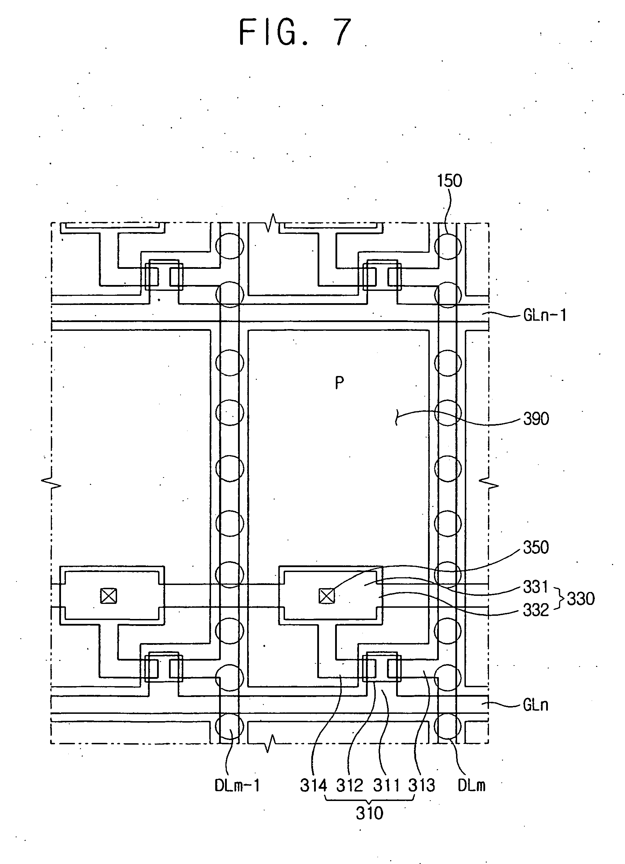

Referring to FIG. 7, in another exemplary embodiment of the present invention, a negative voltage is applied only to data wires DL. Thus, the negative voltage is not applied to gate wires GL. Rather, a positive voltage or no voltage may be applied to the gate wires GL. As described above, ball spacers 150, which are positively charged, are disposed on the data wires DL by attractive force. Here, the ball spacers 150 are settled by an embossing pattern 306 formed on a passivation insulation layer 305 and do not move by external impact.

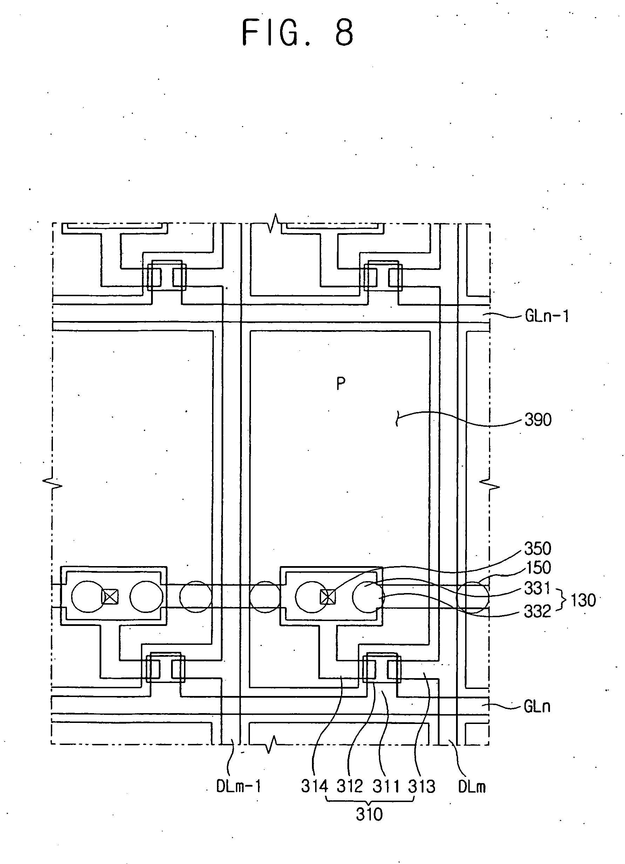

Referring to FIG. 8, in still another exemplary embodiment of the present invention, a negative voltage is applied to a storage electrode line, which includes the first electrode 331 and is formed of the same metal layer as gate wires, and a positive voltage or no voltage is applied to the gate wires and data wires. As described above, ball spacers 150, which are positively charged, are disposed on a storage electrode line by attractive force. Here, the ball spacers 150 are settled by an embossing pattern 306 formed on a passivation insulation layer 305 and do not move by external impact.

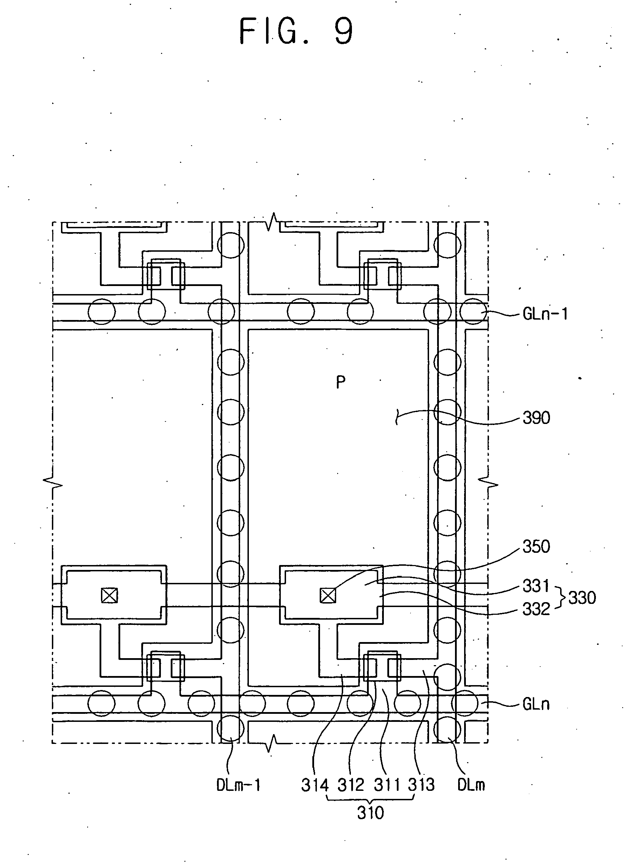

Referring to FIG. 9, in yet another exemplary embodiment of the present invention, a negative voltage is applied to gate wires and data wires. As described above, ball spacers 150, which are positively charged, are disposed on the gate wires and the data wires by attractive force. Here, the ball spacers 150 are settled by an embossing pattern 306 formed on a passivation insulation layer 305 and do not move by external impact.

The ball spacers 150 may be sprayed on the color filter substrate 400 as well. The light blocking member 410 of the color filter substrate 400 may be formed of an organic material or by depositing a metal material, e.g., chrome. If the light blocking member 410 is formed of a metal material such as chrome, the spacers may be selectively sprayed only on the light blocking member 410 by applying a voltage to the light blocking member 410.

If the ball spacers 150 are made to be disposed on the light blocking member 410, the embossing pattern 306 is formed on an area where the overcoat layer 450 and the ball spacers 150 overlap to settle the ball spacers 150. Further, a concavo-convex pattern may be formed under the spacers within a distance between the neighboring color filter patterns, i.e., within an overlapping area of the color filter layer 430 and the light blocking member 410, thereby preventing the spacers from moving

According to exemplary embodiments of the present invention, as described above, ball spacers may be selectively disposed in a light blocking area where a pixel electrode is not disposed and the sprayed ball spacers may be settled so as not to move.

Thus, a gap between display substrates of an LCD panel may be maintained uniformly and light leakage may be prevented. Further, the ball spacers may be prevented from being disposed in a pixel's light emitting region, and thus image quality does not deteriorate.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A display device, comprising:
an array substrate (300) comprising:
a plurality of gate wires (GL), a plurality of data wires (DL) crossing the gate wires (GL);
a plurality of pixel electrodes (390) disposed in areas defined by the gate wires (GL) and the data wires (DL); and
a passivation insulation layer (305) on the gate wires (GL) and the data wires (DL);
a counter substrate (400) comprising a common electrode (470) disposed corresponding to the pixel electrodes (390); and
a spacer (150) to maintain a gap between the array substrate (300) and the counter substrate (400),
**characterized in that**
the passivation insulation layer (305) includes a protruding pattern (306) on a portion of the Passivation insulation layer (305), and the protruding pattern (306) is disposed over at least one of the gate wires (GL) and the data wires (DL),
wherein the spacer (150) is disposed on the protruding pattern (306) over at least one of the gate wires (GL) and the data wires (DL).

2. The display device of claim 1, wherein the spacer (150) is disposed on the protruding pattern (306) over the gate wires (GL).

3. The display device of claim 1, wherein the spacer (150) is disposed on the protruding pattern (306) over the data wires (DL).

4. The display device of claim 1, wherein the counter substrate (400) further comprises a light blocking member (410), and the spacer (150) is disposed between the light blocking member (410) and the protruding pattern (306).

5. The display device of claim 1, wherein the array substrate (300) comprises a plurality of storage electrode wires, and the protruding pattern (306) is disposed over the storage electrode wires,
wherein the spacer (150) is disposed on the protruding pattern (306) over the storage electrode wires.

6. A method for manufacturing a display device, comprising:
forming an array substrate (300) comprising a plurality of gate wires (GL), a plurality of data wires (DL), a plurality of pixel electrodes (390) and a passivation insulation layer (305) on the gate wires (GL) and the data wires (DL):
forming a protruding pattern (306) on a portion of the passivation insulation layer (305), the protruding pattern (306) being disposed over at least one of the gate wires (GL) and the data wires (DL):
applying a voltage to at least one of the gate wires (GL) and the data wires (DL) of the array substrate (300); and
spraying a charged spacer (150) over the array substrate (300), while the voltage is applied to at least one of the gate wires (GL) and the data wires (DL) ; and
assembling the array substrate (300) and a counter substrate (400) and injecting liquid crystals between the array substrate (300) and the counter substrate (400).

7. The method of claim 6, wherein the spacer (150) is sprayed while the voltage is applied to both the gate wires (GL) and the data wires (DL).

## Patentansprüche

1. Anzeigevorrichtung, die Folgendes umfasst:
ein Array-Substrat (300), umfassend:
eine Mehrzahl von Gate-Leitern (GL); eine Mehrzahl von Datenleitern (DL), welche die Gate-Leiter (GL) kreuzen;
eine Mehrzahl von Pixel-Elektroden (390), die in Bereichen angeordnet sind, die von den Gate-Leitern (GL) und den Datenleitern (DL) begrenzt werden; und
eine Passivierungsisolierschicht (305) auf den Gate-Leitern (GL) und den Datenleitern (DL);
ein Gegensubstrat (400), umfassend eine gemeinsame Elektrode (470), die in Entsprechung zu den Pixel-Elektroden (390) angeordnet ist; und
ein Abstandelement (150) zur Aufrechterhaltung eines Abstands zwischen dem Array-Substrat (300) und dem Gegensubstrat (400),
**dadurch gekennzeichnet, dass**
die Passivierungsisolierschicht (305) eine vorstehende Struktur(306) auf einem Teil der Passivierungsisolierschicht (305) umfasst und die vorstehende Struktur (306) über mindestens einem der Gate-Leiter (GL) und der Datenleiter (DL) angeordnet ist,
wobei das Abstandelement (150) auf der vorstehenden Struktur (306) über mindestens einem der Gate-Leiter (GL) und der Datenleiter (DL) angeordnet ist.

2. Anzeigevorrichtung gemäß Anspruch 1, wobei das Abstandelement (150) auf der vorstehenden Struktur (306) über den Gate-Leitern (GL) angeordnet ist.

3. Anzeigevorrichtung gemäß Anspruch 1, wobei das Abstandelement (150) auf der vorstehenden Struktur (306) über den Datenleitern (DL) angeordnet ist.

4. Anzeigevorrichtung gemäß Anspruch 1, wobei das Gegensubstrat (400) ferner ein lichtblockierendes Element (410) umfasst und das Abstandelement (150) zwischen dem lichtblockierenden Element (410) und der vorstehenden Struktur (306) angeordnet ist.

5. Anzeigevorrichtung gemäß Anspruch 1, wobei das Array-Substrat (300) eine Mehrzahl von Speicherelektrodenleitern umfasst und die vorstehende Struktur (306) über den Speicherelektrodenleitern angeordnet ist,
wobei das Abstandelement (150) auf der vorstehenden Struktur (306) über den Speicherelektrodenleitern angeordnet ist.

6. Verfahren zur Herstellung einer Anzeigevorrichtung, umfassend:
die Bildung eines Array-Substrats (300), umfassend eine Mehrzahl von Gate-Leitern (GL), eine Mehrzahl von Datenleitern, eine Mehrzahl von Pixelelektroden (390) und eine Passivierungsisolierschicht (305) auf den Gate-Leitern (GL) und den Datenleitern (DL);
die Bildung einer vorstehenden Struktur (306) auf einem Teil der Passivierungsisolierschicht (305), wobei die vorstehende Struktur (306) über mindestens einem der Gate-Leiter (GL) und Datenleiter (DL)angeordnet ist;
Anlegen einer Spannung an mindestens einen der Gate-Leiter (GL) und der Datenleiter (DL) des Array-Substrats (300); und
Aufsprühen eines geladenen Abstandelements (150) über dem Array-Substrat (300), während die Spannung auf mindestens einen der Gate-Leiter (GL) und der Datenleiter (DL) angelegt ist; und
Montieren des Array-Substrats (300) und eines Gegensubstrats (400) und Einspritzen von Flüssigkristallen zwischen dem Array-Substrat (300) und dem Gegensubstrat (400).

7. Verfahren gemäß Anspruch 6, wobei das Abstandelement (150) aufgesprüht wird, während die Spannung sowohl an die Gate-Leiter (GL) wie auch an die Datenleiter (DL) angelegt ist.

## Revendications

1. Un dispositif d'affichage comprenant:
un substrat de matrice (300) comprenant :
une pluralité de fils de circuit (GL), une pluralité de fils de données (DL) traversant les fils de circuit (GL) ;
une pluralité d'électrodes de pixels (390) disposées dans des zones définies par les fils de circuit (GL) et les fils de données (DL) ; et
une couche d'isolation de passivation (305) sur les fils du circuit (GL) et les fils de données (DL) ;
un contre-substrat (400) comprenant une électrode commune (470) disposée de façon à correspondre aux électrodes de pixels (390) ; et
une entretoise (150) pour conserver un espace entre le substrat de matrice (300) et le contre-substrat (400),
**caractérisé en ce que** la couche d'isolation de passivation (305) inclut une configuration en saillie (306) sur une portion de la couche d'isolation de passivation (305) et la configuration en saillie (306) est disposée sur au moins un des fils de circuit (GL) et des fils de données (DL), où l'entretoise (150) est disposée sur la configuration en saillie (306) sur au moins un des fils de circuit (GL) et des fils de données (DL).

2. Le dispositif d'affichage de la revendication 1, où l'entretoise (150) est disposée sur la configuration en saillie (306), sur les fils de circuit (GL).

3. Le dispositif d'affichage de la revendication 1, où l'entretoise (150) est disposée sur la configuration en saillie (306), sur les fils de données (DL).

4. Le dispositif d'affichage de la revendication 1, où le contre-substrat (400) comprend de plus un élément bloquant la lumière (410), et l'entretoise (150) est disposée entre l'élément bloquant la lumière (410) et la configuration en saillie (306).

5. Le dispositif d'affichage de la revendication 1, où le substrat de matrice (300) comprend une pluralité de fils d'électrodes de stockage et la configuration en saillie (306) est disposée sur les fils d'électrodes de stockage
où l'entretoise (150) est disposée sur la configuration en saillie (306) sur les fils d'électrodes de stockage.

6. Une méthode pour fabriquer un dispositif d'affichage, comprenant :
formant un substrat de matrice (300) comprenant une pluralité de fils de circuit (GL), une pluralité de fils de données (DL), une pluralité d'électrodes de pixels (390) et une couche d'isolation de passivation (305) sur les fils du circuit (GL) et les fils de données (DL) ;
formant une configuration en saillie (306) sur une portion de la couche d'isolation de passivation (305), la configuration en saillie (306) étant disposée sur au moins un des fils de circuit (GL) et des fils de données (DL) ;
appliquant une tension sur au moins un des fils de circuit (GL) et des fils de données (DL) du substrat de matrice (300) ; et
projetant une entretoise chargée (150) sur le substrat de matrice (300) alors que la tension est appliquée à au moins un des fils de circuit (GL) et des fils de données (DL) ; et
assemblant le substrat de matrice (300) et un contre-substrat (400) et injectant des cristaux liquides entre le substrat de matrice (300) et le contre-substrat (400).

7. La méthode de la revendication 6, où l'entretoise (150) est projetée alors que la tension est appliquée à la fois aux fils de circuit (GL) et aux fils de données (DL).
